Europäisches Patentamt

(19) European Patent Office

Office européen des brevets

(11) **EP 0 501 429 B1**

(12) **EUROPEAN PATENT SPECIFICATION**

(45) Date of publication and mention
of the grant of the patent:
**10.07.1996 Bulletin 1996/28**

(51) Int. Cl.$^6$: **C03B 37/012**

(21) Application number: **92103199.3**

(22) Date of filing: **25.02.1992**

(54) **Method for producing glass preform for optical fiber**

Verfahren zum Herstellen einer Glasvorform für optische Fasern

Procédé pour la fabrication d'une préforme de verre pour des fibres optiques

(84) Designated Contracting States:
**DE FR GB IT**

(30) Priority: **25.02.1991 JP 29869/91**

(43) Date of publication of application:
**02.09.1992 Bulletin 1992/36**

(73) Proprietor: **SUMITOMO ELECTRIC INDUSTRIES, LTD**
**Osaka-shi, Osaka-fu 541 (JP)**

(72) Inventors:
• **Ito, Masumi,**
c/o Yokohama Works of
**Sakae-ku, Yokohama-shi, Kanagawa-ken (JP)**
• **Kanamori, Hiroo,**
c/o Yokohama Works of
**Sakae-ku, Yokohama-shi, Kanagawa-ken (JP)**
• **Danzuka, Toshio,**
c/o Yokohama Works of
**Sakae-ku, Yokohama-shi, Kanagawa-ken (JP)**
• **Yokota, Hiroshi,**
c/o Yokohama Works of
**Sakae-ku, Yokohama-shi, Kanagawa-ken (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**81904 München (DE)**

(56) References cited:
**EP-A- 0 141 549      EP-A- 0 182 250**
**EP-A- 0 196 671      EP-A- 0 198 510**
**EP-A- 0 438 876      FR-A- 2 441 594**
**FR-A- 2 445 301**

• **CHEMICAL ABSTRACTS, vol. 110, no. 18, Columbus, Ohio, US; abstract no. 159238V, & JP-A-63256545 (Sumitomo Electric Ind. Ltd.) 24 October 1988**
• **CHEMICAL ABSTRACTS, vol. 106, no. 24, Columbus, Ohio, US; abstract no. 200656N, & JP-A-62046931 (Sumitomo Electric Ind. Ltd.) 28 February 1987**
• **PATENT ABSTRACTS OF JAPAN vol. 11, no. 60 (C-405)(2507) 24 February 1987; &JP-A-61 219 733 (Sumitomo Electric Ind. Ltd.) 30 September 1986**
• **PATENT ABSTRACTS OF JAPAN vol. 11, no. 259 (C-441)(2706) 21 August 1987; & JP-A-62 059 545 (Furukawa Electric Co. Ltd.)**
• **PATENT ABSTRACTS OF JAPAN vol. 9, no. 160 (C-289)(1883) 4 July 1985;& WORLD PATENTS INDEX LATEST, DERWENT PUBLICATIONS LTD., LONDOND GB, accession no. 85-083377, week 14; & JP-A-60 033 244 (Dainichi Nippon Cables Co. Ltd.) 20 February 1985**
• **PATENT ABSTRACTS OF JAPAN vol. 5, no. 35 (C-046)5 March 1981; & JP-A-55 162 441 (NTT Corp.) 17 December 1980**
• **PATENT ABSTRACTS OF JAPAN vol. 5, no. 152 (C-073)(0824) 25 September 1981; & JP-A-56 084 328 (Dainichi Nippon Cables Co. Ltd.) 9 July 1981**
• **PATENT ABSTRACTS OF JAPAN vol. 12, no. 092 (C-483)(2939) 25 March 1988; & JP-A-62 226 829 (Farukawa Electric Co. Ltd.) 5 October 1987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

• PATENT ABSTRACTS OF JAPAN vol. 13, no. 169 (C-587)(3517) 21 April 1989; JP-A-63 319 | 224 (Sumitomo Electric Ind. Ltd.) 27 December 1988

## Description

### BACKGROUND OF THE INVENTION

#### Field of the Invention

The present invention relates to a method for producing a glass preform for use in the fabrication of an optical fiber having a low transmission loss.

#### Description of the Related Art

As one of methods for the production of a glass preform for an optical fiber, a rod-in-tube method is known, which comprises inserting a rod as a core material in a glass tube as a cladding material having a lower refractive index than that of the core material and fusing and integrating them together. Since the glass preform produced by the rod-in-tube method tends to have defects at the interface between the core material and the cladding material, the optical fiber fabricated from the preform has a large transmission loss.

To solve such problem of the rod-in-tube method, Japanese Patent Publication No. 34938/1989 proposes a method comprising inserting a glass rod as a core material in a glass tube as a cladding material, mounting a composite of the rod and the tube on a glass lathe, and heating the composite with an oxyhydrogen burner to shrink the tube, whereby the tube and rod are molten and integrated together.

In this method, the oxyhydrogen burner is moved from one end of the composite to the other and a gas such as a halogen gas is flowed in a space between the rod and the tube. However, in this method bubbles may remain at the interface between the glass tube and the glass rod of the resulting preform, so that an optical fiber fabricated from such preform does not have sufficient mechanical strength and the transmission loss is adversely affected.

EP-A-0 196 671 discloses a method for producing a glass preform for an optical fiber. According to its examples, a mixture of a halogen-containing gas such as $SF_6$, $SOCl_2$, $SiF_4$ or $Cl_2$ and oxygen gas is supplied between a glass rod and glass tube during their collapse together. The glass tube is made of pure silica without a metal oxide dopant. The gas mixture is used to remove moisture, dust or impurities from the glass surface and to prevent or suppress the formation of rough surfaces due to etching.

EP-A-0 198 510 discloses a method for producing a glass preform for an optical fiber. Such a method however does not include the use of a gas mixture including *inter alia* oxygen in the step of collapsing the glass tube onto the glass rod.

JP-A-63-256545 discloses a rod-in-tube method for manufacturing an optical fiber preform in which the glass rod has a carbon coating on its peripheral surface. Fusing of the rod and tube takes place in a mixed gas containing $CCl_4$ as a halogen-containing gas.

It is known for the glass rod which forms the core material to consist of quartz glass containing a dopant such as Ge or Ti. The dopant increases the refractive index of the core material. Such a dopant element is present in the form of an oxide such as $GeO_2$ or $TiO_2$. When the composite of the glass rod and the glass tube is heated and fused together, the quartz glass should be sufficiently softened. Therefore, the composite is heated at a temperature of 1900°C or higher. At such a high temperature, the metal oxide is reduced. For example, in the case of $GeO_2$, gaseous GeO and molecular oxygen are formed according to the following reaction:

$$GeO_2 \rightarrow GeO + 1/2O_2$$

The gases generated during the fusing of the rod and tube become trapped at the interface between the core material and the cladding material to form bubbles. The halogen-containing gas accelerates the above reduction reaction. To suppress this reaction, the present invention uses oxygen gas.

### SUMMARY OF THE INVENTION

An object of the present invention is to provide an improved rod-in-tube method for producing a glass preform for use in the fabrication of an optical fiber.

Another object of the present invention is to provide a rod-in-tube method which can avoid the formation of bubbles at the interface between the glass rod and the glass tube.

According to the present invention, there is provided a method for producing a glass preform for use in the fabrication of an optical fiber, which method comprises the steps of:

inserting a glass rod containing a metal oxide dopant whose distribution includes the peripheral surface of the glass rod as a core material in a glass tube as a cladding material having a lower refractive index than that of the core material, and

heating a composite of the glass rod and the glass tube from outside whilst flowing a mixed gas comprising a halogen-containing gas selected from $CF_4$, $SF_6$ or $Cl_2$ and 20% to 80% by volume of oxygen gas in the space between the glass rod and the glass tube to fuse them together to produce the glass preform.

### BRIEF DESCRIPTION OF THE DRAWINGS

Fig. 1 is a cross-sectional view of one example of an apparatus for carrying out the method of the present invention, and

Fig. 2 is a graph showing the relationship between the number of bubbles and the transmission loss with the oxygen concentration in the mixed gas which is filled in the space between the glass rod and the glass tube in the Example.

DETAILED DESCRIPTION OF THE DRAWINGS

The method of the present invention can be carried out under substantially the same condition as those in the conventional rod-in-tube method except that the mixed gas is flowed in the space between the glass rod and the glass tube during fusing them together by heating.

The mixed gas to be filled contains 20 to 80% by volume of the oxygen gas. When the oxygen content is less than 20% by volume, the bubbles may be formed at the interface. When the oxygen content is larger than 80 % by volume, water or moisture on the glass surfaces is not sufficiently removed because of the shortage of the halogen contents so that the finally fabricated optical fiber has increased transmission loss due to hydroxyl groups in the fiber.

Examples of the halogen-containing gas are pure halogen such as fluorine and chlorine gases, compounds containing a halogen atom such as $CF_4$, $SF_6$ and the like.

Preferably, the pressure in the space between the glass rod and the glass tube is maintained at reduced pressure, for example, around 300 mmHg during fusing them together. By the reduced pressure, the shrinkage of the glass tube is accelerated.

In one preferred embodiment, at least one, preferably both of the inner wall of the glass tube and the peripheral surface of the glass rod is etched before fusing. The glass surface is etched with fluorohydric acid with an amount of 10 to 200 µm in thickness.

The present invention will be explained further in detail by making reference to the accompanying drawings.

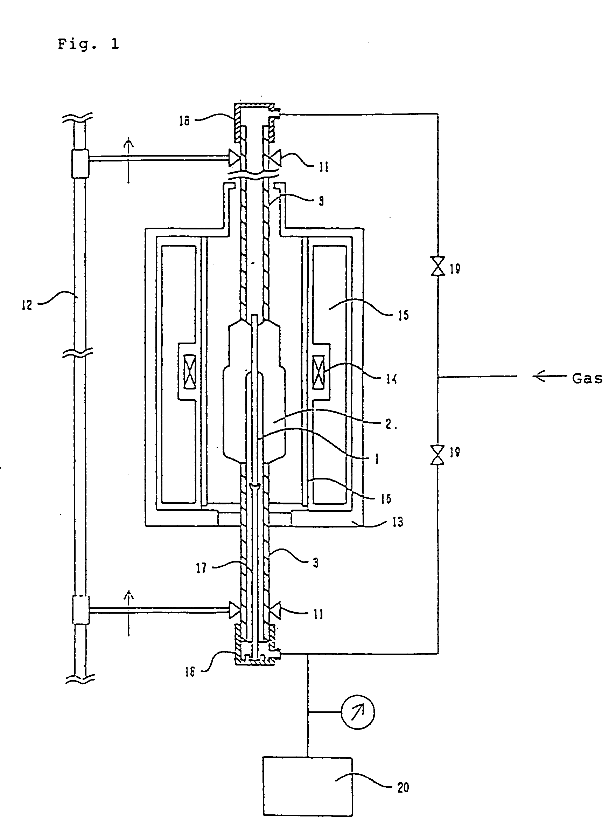

Fig. 1 is a cross sectional view of one example of an apparatus used in the rod-in-tube method of the present invention, in which numerals 1, 2 and 3 stand for a glass rod as a core material, a glass tube as a cladding material and supporting glass tubes. The glass rod and the glass tube are preferably produced by the VAD method. At both ends of the glass tube 2, respective supporting glass tubes are connected by fusing, and the supporting glass tubes are vertically suspended by, for example, chucks 11 and moved up and down by a lifting mechanism 12. The glass tube 2 is placed in an inner chamber of a heating furnace 13. The furnace 13 has a ring heater 14, a heat insulator 15 and a muffle tube 16 which prevents deposition of impurities liberated from the heater and the insulator onto the glass preform.

The glass rod 1 is inserted in the glass tube 2 and a lower end of the glass rod 1 is supported by a supporting rod 17. Both free ends of the supporting tubes 3 are provided with capping tools 18, 18' to maintain a specific atmosphere or specific pressure in the tubes. The lower tool 18 supports the glass rod 1 via the supporting rod 17. The mixed gas is supplied in the space between the glass rod 1 and the glass tube 3 from a gas supplying line by opening an upper valve 19. Then, the upper end of the glass tube 2 in which the glass rod 1 is set is moved to a level of the ring heater 14, hereby, the glass tube 2 is heated and soften from the upper end, and shrinks due to surface tension and pressure difference between the inside and outside of the glass tube 2, so that the glass tube and the glass rod are fused together. Under such conditions, the composite of the glass tube and the glass rod is lifted up and fused together in the longitudinal direction to complete the fusion bonding of the glass rod and the glass tube, during which the gas in the space between the glass rod 1 and the glass tube 2 is exhausted by a used gas-treating apparatus 20.

Example

A glass rod as a core material containing germanium homogeneously and then having a uniform refractive index profile in the glass rod and a glass tube as a cladding material made of pure quartz glass were used. They were mounted in the apparatus of Fig. 1. A space between the glass rod and the glass tube was filled with a mixed gas of chlorine gas and oxygen gas in various volume ratios from a gas supplying line having valves 19 and an used gas-treating apparatus 20. Then, the composite of the glass rod and the tube was heated from its upper end and fused together to produce a glass preform.

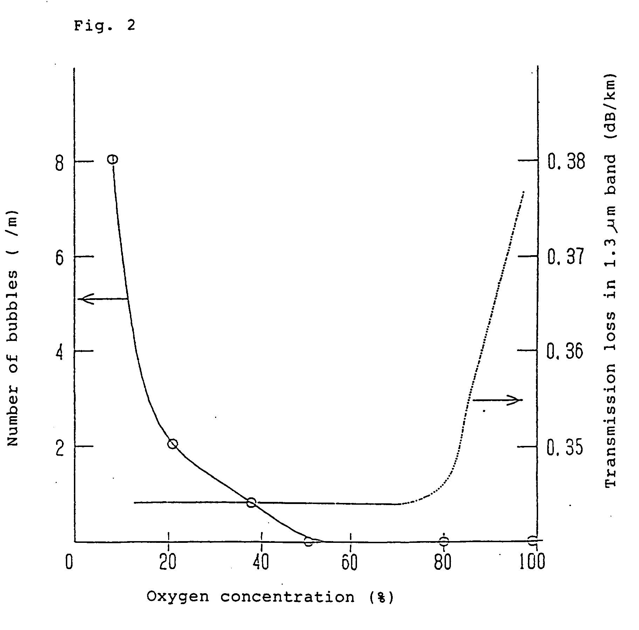

The results are shown in Fig. 2.

When the oxygen concentration in the mixed gas was 50 % by volume or larger, no bubble was formed. At the oxygen concentration of 20 % by volume, only two bubbles per meter were formed.

The transmission loss of an optical fiber fabricated from the above produced glass preform had a small transmission loss of 0.35 dB/km at a 1.3 µm wavelength band at the oxygen concentration of 80 % by volume or smaller, but at the oxygen concentration larger than 80 % by volume, the transmission loss greatly increased. Therefore, the preferred oxygen concentration range is from 20 to 80 % by volume in which the number of bubbles is small and the transmission loss is low.

**Claims**

1. A method for producing a glass preform for use in the fabrication of an optical fiber, which method comprises the steps of:

inserting a glass rod (1) containing a metal oxide dopant whose distribution includes the peripheral surface of the glass rod as a core material in a glass tube (2) as a cladding material having a lower refractive index than that of the core material, and

heating a composite of the glass rod (1) and the glass tube (2) from outside whilst flowing a mixed gas comprising a halogen-containing gas selected from $CF_4$, $SF_6$ or $Cl_2$ and 20% to 80% by volume of oxygen gas in the space between the glass rod and the glass tube to fuse them together to produce the glass preform.

## Patentansprüche

1. Verfahren zur Erzeugung eines Glas-Vorformlings für die Verwendung bei der Herstellung einer optischen Faser, das folgende Schritte umfaßt:

   Einsetzen eines Glasstabes (1), der ein Metalloxid als Dotierstoff enthält, dessen Verteilung die Mantelfläche des Glasstabes umfaßt, als Kernmaterial in ein Glasrohr (2) als Umhüllungsmaterial, das einen kleineren Brechungsindex als das Kernmaterial aufweist, und

   Erhitzen des Schichtkörpers aus dem Glasstab (1) und dem Glasrohr (2) von außen, während ein Gasgemisch, das ein halogenhaltiges Gas, ausgewählt aus $CF_4$, $SF_6$ oder $Cl_2$, und 20 bis 80 Volumenprozent Sauerstoff umfaßt, in den Raum zwischen dem Glasstab und dem Glasrohr strömt, um diese zur Erzeugung des Glas-Vorformlings miteinander zu verschmelzen.

## Revendications

1. Procédé pour produire une préforme de verte destinée à être utilisée dans la fabrication d'une fibre optique, lequel procédé comprend les étapes suivantes :

   insertion d'une baguette de verte (1) contenant un dopant oxyde métallique dont la distribution inclut la surface périphérique de la baguette de verte en tant que matériau de coeur dans un tube de verte (2) en tant que matériau de gaine ayant un indice de réfraction inférieur à celui du matériau de coeur, et

   chauffage d'un composite de la baguette de verte (1) et du tube de verte (2) de l'extérieur tandis qu'un mélange gazeux comprenant un gaz halogéné choisi parmi $CF_4$, $SF_6$ ou $Cl_2$ et 20 % à 80 % en volume d'oxygène est amené à s'écouler dans l'espace entre la baguette de verre et le tube de verre pour les faire fondre ensemble pour produire la préforme de verre.

Fig. 1

Gas

Fig. 2